# EUROPEAN PATENT APPLICATION

(11) **EP 1 637 240 A1**
(43) Date of publication of application: **22.03.2006**
(21) Application number: 05460027.5
(22) Date of filing: 14.09.2005
(51) Int. Cl.: B09B 3/00, C02F 11/00

(54) **Method and set-up for manufacturing products from waste materials**

(30) Priority: 16.09.2004 PL 370120
(71) Applicant: "Unimetal" Spoolka z o.o. w Zlotowie, 77-400 Zlotow (PL)
(72) Inventor: Rogut, Stanislaw, 74-200 Pyrzyce (PL); Zakrzewski, Miroslaw, 74-200 Pyrzyce (PL); Cwiszewski, Jerzy, 77-400 Zlotow (PL); Wiese, Wieslaw, 77-400 Zlotow (PL); Jankowski, Piotr, 77-400 Zlotow (PL)
(74) Representative: Majcherczak, Elzbieta

(57) **Abstract**

The subject matter of the invention is a method and set-up for manufacturing products from waste materials.

The method of manufacturing products from waste materials is characterized by the fact that waste material of water content above 20% is mixed rapidly, i.e. for 2 to 20 minutes, with a reacting substance of very high capacity for binding water and producing hydration heat, advantageously with ground burnt lime of high reactivity with parameter 0.5 minutes < t₆₀ < 4 minutes, in the amount of from 25% to 60% of waste material weight. The mixed components are subject to the reaction of exothermic reaction of hydration. The released water vapour is carried outside, while its remaining fraction is bound by the reacting substance to a hydrate form, which continues to release hydration heat, thus leading to an increase of the product temperature, advantageously to the level from 70 to 160° C. In the case of the temperature shifting above or below the optimal level for a given type of waste material processed, the amount of the reacting substance is reduced or increased. After a curing period, the product is cooled down. The set-up contains a reaction chamber containing mixer (5) with cutting blades (8), scraper buckets (7) and driver (9). In the upper part of chamber (1) there is mixing pan (11), ending in a sieve (12). The walls of pan (11) contain the chutes feeding waste (14), reacting substance (15) and corrective agent (16). The hood of fume-extracting system (18), ending in chimney (19), is located above cover (17) of pan (11). The bottom of chamber (1) is equipped with a system for product extraction (24) and release gate valve (25).

## Description

The subject-matter of the invention is a method and set-up for manufacturing products from waste materials, especially from slaughterhouse offal and animal processing, sludge, and plastics.

The known and used methods of utilizing animal waste consist in its fragmentation and sterilization in order to kill pathogenic organisms, bacteria, and viruses, as well as to prevent any subsequent processes of biodegradation. In the following stage of the process, water is separated from the organic material obtained in this way, and fat gets isolated from the dried mass using filtration or centrifugation. Large quantities of the condensate created during the drying process are difficult to purify because of the high concentration of organic ammonium compounds. The dry residue remaining after the fat separation is fragmented into a form of animal meal, suitable for feeding into the burners of rotary furnaces for clinker firing or power furnaces. Isolated fats are also earmarked for burning.

The high fat content of these products results in cement plants refusing to accept them as alternative fuel, because it clogs their feeder systems, e.g. burners.

The known methods of utilizing organic waste in the form of sludge consist in its concentration, disinfection, filtration, and the subsequent use of the obtained product for compost preparation, or its transfer for burning at e.g. a cement plant.

An inconvenience preventing the full use of products obtained from sludge is their random chemical composition, [and] the presence of various, often very dangerous chemical compounds, used both in industry and in households, travelling along with sewage to sewage-treatment plants.

A common problem connected with the utilization of waste, and animal waste in particular, is the need to subject it to a preliminary thermal treatment for sterilization. Because of the rules and regulations in force, the majority of slaughterhouse offal and animal processing waste must be subject to earlier thermal sterilization, by keeping it heated up for a specified period of time and at a specified temperature.

The process of sterilization is usually carried out in autoclaves heated with water vapour under pressure. A drawback of such methods is that, independently of the processing scale, each system of thermal treatment requires the installation of a costly heating system for the production of overheated high-pressure water vapour. Because of the heat permeating from the outside to the centre of the reaction chamber, it becomes necessary to continue the heating process for a prolonged time, so as to be sure that the batch subjected to thermal treatment has been adequately heated up throughout its entire mass. Application of indirect heating with heating pipes located inside the reactor chamber leads in turn to the necessity of using complex structural designs, serving to empty and clean the reaction chamber from the residues of the thermal processing products.

The [design] solutions consisting in overheated high-pressure water vapour being forced directly into the batch-containing reaction chamber requires the reactor to be equipped with a complicated safeguarding device, subject to Technical Inspection, while increasing the amount of condensate that is difficult to manage. In order to lower the capital costs, the sterilization-requiring waste is gathered after cooling in regional waste collecting establishments, and after a proper amount is collected it is transferred to utilization plants.

The purpose of the invention is to eliminate the above inconveniences via the development of a method and set-up for processing waste materials into products of full value, [and] usable in economy.

The method of converting waste materials into [usable] products according to the present invention is characterized by waste material with water content above 20% rapidly, [i.e.] for 2 to 20 minutes, mixed with a reacting substance of very high capacity for binding water and producing hydration heat, advantageously with ground burnt lime of high reactivity with parameter 0.5 minutes < t₆₀ < 4 minutes, in the amount of from 25% to 60% of waste material weight. The thoroughly mixed components are simultaneously pushed through slits of predetermined shape, thus undergoing mechanical fragmentation and grinding, while being subjected to the reaction of exothermic hydration between the reacting substance and water contained in the waste, as a result of which, during a time interval much shorter than that of mixing, a large amount of heat gets abruptly generated, leading to the vaporization of a large fraction of water in the form of humid water vapour carried off outside. On the other hand, the remaining part [of water] is bound by the reacting substance to the form of a hydrate creating a porous and dry product with heat-insulating properties, out of which the hydration heat is still released, which results in an increase of product temperature, advantageously to the level from 70 to 160°C. In the case of temperature increase above the level optimal for processing a given type of waste material, the flow of the reacting substance fed is reduced, while in the case of a temperature drop below the optimum level, the amount of the reacting substance gets increased.

In the case when the waste material consists of slaughterhouse offal and animal waste processing, it is fragmented into pieces of dimensions smaller than 12 mm. However, as a result of the thermal and chemical decomposition of amino acids contained in the waste material, gaseous ammonia is generated, which assists the process of chemical and thermal sterilization of the waste materials processed. The hot product thus obtained is then transferred to one or several curing chambers located outside the reaction chamber, where the process of chemical and thermal sterilization is continued at the temperature of up to 160°C for a period from 10 to 120 minutes. When the curing chamber is emptied, the product is cooled down to the ambient temperature and gathered in a tank.

Another waste material is sludge from sewage-treatment plants.

According to the invention, it is advantageous to add a corrective agent to the mixture of waste material and the reacting substance, advantageously screenings of burnt dolomite and/or phosphorite and/or apatite, in the amount of from 5 to 20% in weight.

In the case when the waste material consists of thermoplastics waste in granulated form, it is mixed with water in the amount of from 5% to 40% by weight and with a frothing agent, advantageously aluminium dust in the amount of from 0.1% to 0.2 % by weight, and the generated product in the form of a frothed substance of temperature from 130 to 160°C is poured into a mould, in which the processing ends and cooling to the ambient temperature occurs.

In the method according to the invention, water emulsion of [both] petroleum-derived and oily waste is also used as a waste material.

According to the invention, it is essential that - before being mixed with the waste material - the reacting substance is thoroughly mixed with porous mineral substances of high fluid-absorption capacity.

According to the invention, it is advantageous that the temperature of the product transferred to the curing chambers is higher by 1 to 40°C from the temperature set by the requirements defined by the regulations concerning veterinary and microbiological safety.
The set-up for manufacturing products from waste materials according to the [present] invention, containing a reaction chamber with a mixer, is characterized by the fact that the reaction chamber in the form of a drum has an electric engine seated in its bottom, which - via a gear- turns a drive shaft located along the symmetry axis of the chamber. A mixer with stirrer arms is mounted on the drive shaft, and a tilted scraper bucket is located on the mixer arm. Cutting blades are located underneath the mixer, with vertical slats additionally mounted on the mixer arm, while in the upper part of the drive shaft, a driver is mounted with mixing and pushing elements located below it in the screening part of the funnel. In the upper part of the reaction chamber, at least one mixer pan is located, made in the form of a conical funnel and ending in its lower part in a sieve, also in the form of a truncated cone with slits. The walls of the mixer pan contain chutes feeding the waste material, the reacting substance and the corrective agent. Above the cover of the pre-mixing pan there is a conical dome of the fume-extracting system ending in a chimney, with ventilating slits located between the reactor wall and the pan rim. The bottom of the reaction chamber is equipped with a system for product extraction and a gate valve for product release. The reaction chamber with the mixer pan and the ascending part of the fume-extracting system are tucked in with a heat-insulating lining, covered with a shield casing. Sets of temperature sensors are located [both] in the reaction chamber and in the region of fume extraction.

The slits located in the mixer pan have the shape of an inverted trapezoid, widening to the outside.

The method and set-up for manufacturing products from waste material according to the [present] invention makes it possible to obtain dry and non-sticky products, while delivering to the process an amount of heat energy several times smaller than in the classic methods of processing and drying, thanks to the phenomenon of abrupt heat generation from the components present in the process. An advantageous result of the [present] invention is the elimination of the biological hazard present in the currently-used methods of utilizing animal waste and sludge, as well as the elimination of the olfactory noxiousness, while retaining the fertilizing value of the nitrogen compounds contained in the sludge. In the case of products obtained from sludge and animal waste, the emission of nitrogen compounds into the atmosphere is reduced substantially.

The method and set-up according to the [present] invention may constitute an end unit of any process line involving, among others, animal and plastics waste, sludge, as well as water emulsions of petroleum-derived or oily waste. The essence of the invention may be also used in harbours, at airports, on board of ships, [or] in restaurants, i.e. at all places where one can find waste constituting a raw material for manufacturing the above-mentioned products according to the invention, and which so far have constituted environmentally harmful waste.

The method according to the invention is explained more closely through the following examples.

**Example 1:** Slaughterhouse offal and animal processing waste, advantageously poultry offal containing 82% moisture, are fragmented using known methods, advantageously to dimensions below 12 mm. Subsequently, a flow of constant volume in the amount of 2000 litres per hour is prepared and fed with a helical conveyor, advantageously worm conveyor, to mixer pan 11. Simultaneously, a flow of constant volume of ground burnt lime of high reactivity, advantageously with parameter t₆₀ in between 1 and 2 minutes, [and] in the amount of 40% by weight of the waste processed, is fed to reactor pan 11 with reacting substance feeder 31, and additionally a corrective agent in the form of screenings of burnt dolomite, in the amount of 10% by weight, is supplied along with the corrective agent feeder. The substrate flow is pre-mixed in mixer pan 11, for this aim using the pre-mixing arm, so-called driver 9, leading to an initial contact between the substrates and to a displacement of the mixture components down towards the bottom -- the centre of pan 11. While moving down in pan 11, the pre-mixed components are subject to further mixing with mixing elements mounted on stirrer 5, and, simultaneously, to mechanical fragmentation and grinding by being pushed through the side and bottom slits 13 of the cone of pan 11, thus constituting a sieve. At their perimeter, the side and bottom walls of pan 11, constructed in the form of a truncated cone, have longitudinal slits 13 widening to the outside, which prevents their clogging and choking by the moving reacting mixture. As a result of the exothermic reaction of hydration between the moisture contained in the waste and the reacting substance, hydration heat is generated in the reacting mixture, alongside the simultaneous phenomenon of intense evaporation of water vapour produced from moisture contained in the material under processing. While moving down in the reaction region of the reactor, the mixture is subjected to strong mixing and heating. The transient agglomerates and lumps of waste material decay spontaneously under the influence of the reaction process occurring in their interior, accompanied by the release of large quantities of water vapour. While moving to the top of the reactor, the intense fumes released under the influence of the chemical reaction, [and composed] mainly of humid water vapour and ammonia generated during the reaction of the reacting substance with proteins and amino acids present in the waste material, sweep around the lower part of the mixer pan, moving to its peripheral part equipped with one or more peripheral openings, in turn heating up pan 11 and the upper parts of the internal and external walls. The dominant part of moisture in the form of humid water vapour fumes is removed by the gas and fume extracting system, while the remaining part of water present in the material is simultaneously bound in a hydrate form. The physical and chemical structure of the reacting mixture changing under the influence of the ongoing chemical process, and the accompanying transformation of the reacting mixture into a porous and dry product with heat-insulating properties lead to a decrease in thermal conductivity of the substance produced. The hygroscopic water contained inside the porous grains of the reacting substance still keeps reacting with lime particles, releasing hydration heat. At the same time, the mixture starts to exhibit a deficiency of water able to absorb the hydration heat still released. With the increasing insulating capacity of the manufactured product, this leads to a temperature rise. As the process continues and the reacting mixture moves down into the region of product curing, the temperature of the reacting mixture increases from 140° C to 160° C, but it is advantageous to keep the temperature at the level of 150° C. Temperature sensor 28 located in the reaction region transfers the temperature data to the system controlling the amount of reacting substance fed into the reactor entrance. In the case when in the curing region the temperature should rise above 160° C, the reacting substance feeder system reduces the flow of the reacting substance fed by 10% in weight, while in the case of a temperature drop below 140° C, it increases its amount by 10%. By changing the amount of the reacting substance and the intensity of mixing of the reacting mixture while cooling the reaction chamber, any temperature can be obtained in the reacting mixture, from the ambient temperature to the temperature of equilibrium of the thermal distribution of the hydrate of the reacting substance. The reaction products in form of a granulated of the temperature of 150° C is fed by a worm conveyor to one of the three curing chambers, wherein they remain for a period of 25 minutes in order for the thermal and chemical sterilization to occur. Then, when the reaction process is completed, which is manifested by a decrease in the temperature of the product present in the chamber, the chamber is emptied to a tank with the help of an extracting system coupled to a cooling system, where the product collected in the product storing tank is cooled off, advantageously to the ambient temperature. The manufactured product is used as a calcium and magnesium organic fertilizer. In the case when ground burnt lime of high reactivity is used as a reacting substance, it is possible to obtain temperatures [ranging] from the ambient temperature up to 500° C in the reaction region of the reactor of the system according to the invention, without using any external heat sources and at the atmospheric pressure.

**Example 2:** The process is conducted in the way and using a set-up as in Example 1, with the difference that the processing is applied to dehydrated sludge from sewage treatment plants, containing 84% of moisture.
The measured sludge flow of constant volume in the amount of 3000 litres per hour, is fed with a conveyor device onto the mixer pan. Simultaneously, an appropriate amount of the reacting substance, in the form of ground burnt lime and/or chunked lime of high reactivity with parameter t₆₀ from 2 to 4 minutes in the amount of 35% by weight, is supplied onto the pan via a feeder. As a result of the process, as the reacting mixture moves down towards the region of product curing and later towards the reactor exit, the reacting mixture reaches the temperature from 70° C to 80° C, but it is advantageous to maintain the temperature at the level of 75° C. The data on the temperature in the reaction region is used for controlling the amount of the reacting substance fed at the reactor entrance. In the case when the temperature rises above 80° C in the curing region, the reacting substance feeder reduces the flow of the supplied reacting substance by 15% by weight, and when the temperature drops below 60° C, it increases it by 15%. The reaction products, advantageously in the form of a granulate of the temperature of 75° C are carried with a worm conveyor to a storing tank, where the processing ends, with the products subsequently cooled down to the ambient temperature. The manufactured product is used as soil enhancer, an organic calcium fertilizer, or an agent for sanitizing municipal landfill sites.

**Example 3:** The process is conducted as in Example 2, with the difference that the material to be processed constitutes thermoplastics waste originating from used packaging made of polyethylene and/or polypropylene and/or a mixture thereof, fragmented down to the dimensions of 0-2 mm. The granulated waste material is mixed with water in the amount of 12 %, and with a frothing agent in the form of aluminium dust in the amount of 0.2 % by weight, and the prepared constant waste flow in the amount of 1000 kilograms per hour is subsequently supplied via a conveyor onto mixing pan 11. At the same time, an appropriate amount of the reacting substance, in the form of ground burnt lime of very high reactivity with parameter t₆₀ between 0.5 and 2 minutes and in the amount of 15% by weight is supplied with a feeder onto mixing pan 11. As a result of the process, as the reacting mixture moves down towards the region of product curing and later towards the reactor exit, the reacting mixture reaches the temperature from 120° C to 160° C, while it is advantageous to maintain the temperature at the level of 140° C. The data on the temperature in the reaction region is used for controlling the amount of the reacting substance fed at the reactor entrance. The reaction products, advantageously in the form of a frothed substance of the temperature of 140° C, are poured into a mould, where the processing ends, followed by the products cooled down to the ambient temperature. The manufactured product, in the form of a porous substance possessing heat-insulating and bactericidal properties, is used as a heat-insulating material, and, after fragmentation, as a filler in columns for deacidifation of acid sewage from industrial sewage treatment plants.

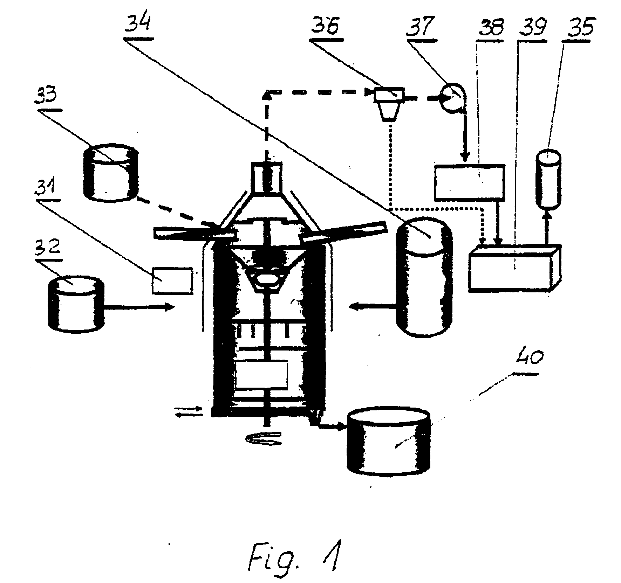

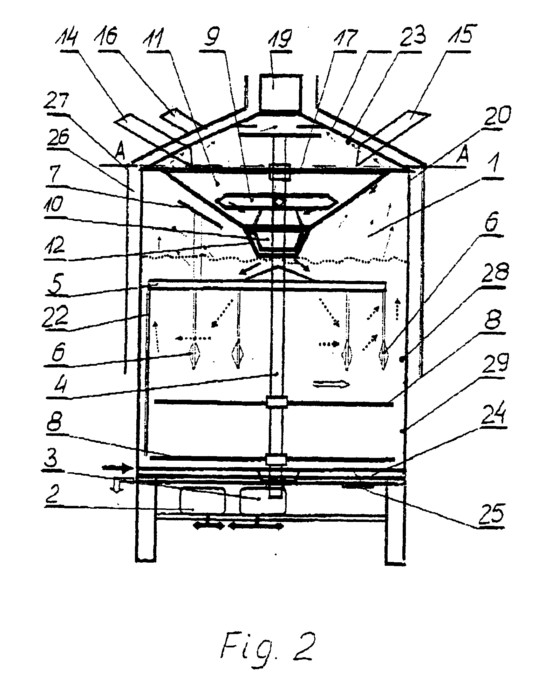

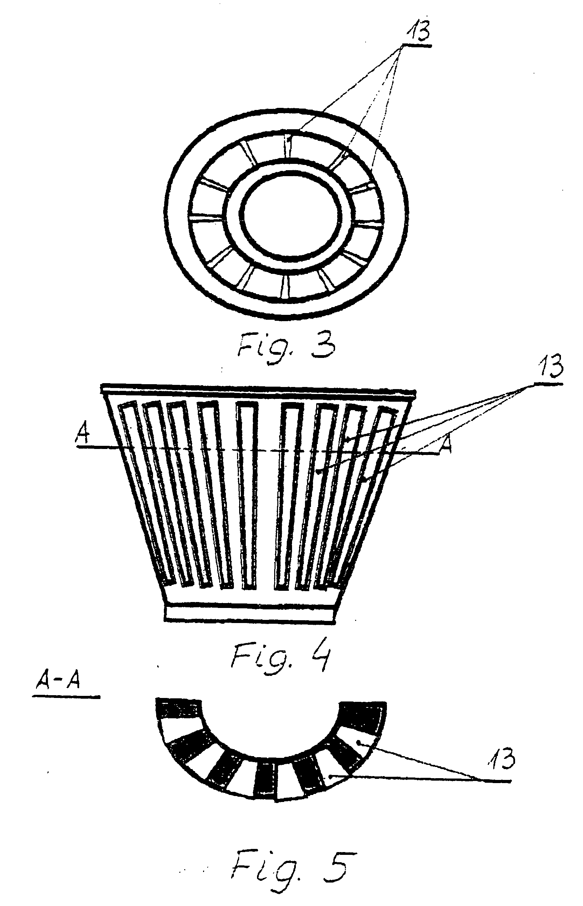

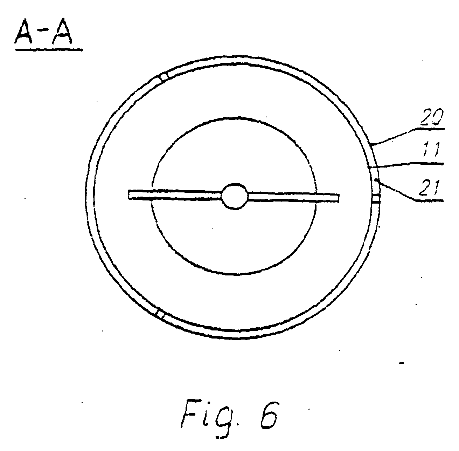

The subject matter of the invention is shown on the example of the set-up construction in the figures [attached], where Fig. 1 shows the system with the product manufacturing set-up, Fig. 2 shows the longitudinal section of the set-up, Fig. 3 shows the top view of the sieve, Fig. 4 shows the side view of the sieve in the bottom part of the conical funnel, Fig. 5 shows the sieve cross-section, and Fig. 6 shows the cross-section of the upper part of the set-up.

The set-up for manufacturing products from waste materials contains reaction chamber 1 in the form of a drum whose outside upper part is tucked in with a layer of insulating lining 26 covered with shield casing 27 made of metal sheet. In the lower part of the drum, electric engine 2 is seated, which via gear 3 turns the drive shaft 4 located along symmetry axis 1 of the chamber.
Mixer 5 with stirrer arms 6 is mounted on drive shaft 4. Tilted scraper buckets 7 are located on the arm of mixer 5, with cutting blades 8 located below mixer 5. In addition, on the arm of mixer 5 vertical slats 22 are mounted, while in the upper part of drive shaft 4 ,driver 9 is mounted with mixing and pushing elements 10 located underneath. The upper part of reaction chamber 1 contains mixer pan 11, made in the form of a conical funnel and ending in its bottom part in sieve 12, also in the form of a truncated cone with slits 13 of the form of an inverted trapezoid, widening to the outside. In the walls of mixer pan 11 the chutes feeding waste material 14, reacting substance 15, and corrective agent 16 are mounted. Waste-supplying chute 14 is connected to buffer waste tank 33, while chute 15 supplying the reacting substance is connected to reacting substance reservoir 34, and chute 16 supplying the corrective agent is connected to corrective agent reservoir 32. On the outside of the reactor, under waste-supplying chute 14, there is feeder 31 adjusting the amount of the supplied waste material, reacting substance and corrective agent. Conical hood 18 of the fume extracting system ending in chimney 19 is situated above cover 17 of mixing pan 11. Ventilating slits 21 are located between reactor wall 20 and the rim of pan 11. The bottom of reaction chamber 1 is equipped with a system for product extraction 24, with gate valve 25 for product release located in the bottom of the reaction chamber. Sets of temperature sensors 23, 28 and 29 are mounted in reaction chamber 1 in the region of fume extracting system 18. On the outside of the reactor, the following devices are located as well: filter 35, fan 37 of the fume extracting system, cyclone 36, condenser 38, absorber 39 and product tank 40.

## Claims

1. The method of manufacturing products from waste materials **characterized by** the fact that waste materials with water content of above 20% is rapidly mixed, for 2 to 20 minutes, with a reacting substance of very high capacity for water binding and hydration heat production, advantageously with ground burnt lime of high reactivity with parameter 0.5 minutes < t₆₀ < 4 minutes, in the amount of from 25% to 60% of waste material by weight, after which the thoroughly mixed components get simultaneously squeezed through slits of predetermined shape, undergoing mechanical fragmentation and grinding, and are subjected to an exothermic reaction of hydration between the water contained in the waste material and the reacting substance, as a result of which, within a time period much shorter than that of mixing, a substantial amount of heat is generated, thus leading to the vaporization of a significant fraction of water in the form of humid water vapour carried away outside, while the remaining amount is bound by the reacting substance into a form of hydrate constituting a porous dry product with heat-insulating properties, which still releases hydration heat, which results in an increase in product temperature, advantageously to a level from 70 to 160° C, [and] if the temperature increases above the level optimal for a given type of the waste material processed, the flow of the reacting substance supplied is reduced, while if the temperature drops below the optimal level, the amount of the reacting substance is increased.

2. The method according to Claim 1 is **characterized by** the fact that the waste material consists of slaughterhouse offal and animal processing waste, which is fragmented into chunks of dimensions smaller than 12 mm, and that - as a result of the thermal and chemical decay of the amino acids contained in the waste material - gaseous ammonia is released assisting the process of chemical and thermal sterilization of the waste material processed, with the thus obtained hot product moved to one or several curing chambers located outside the reaction chamber, where - at the temperature of up to 160° C and for a period from 10 to 120 minutes - the process of chemical and thermal sterilization is continued, with the product - after leaving the curing chamber - cooled to the ambient temperature and then collected in a tank.

3. The method according to Claim 1 **characterized by** the fact that the waste material consists of sludge from sewage treatment plants.

4. The method according to Claims 1 or 2 or 3 **characterized by** the fact that to the mixture of material waste and reacting substance a corrective agent is added, advantageously constituting screenings of burnt dolomite and/or phosphorite and/or apatite in the amount of 5 to 20% by weight.

5. The method according to Claim 1 **characterized by** the fact that the waste material consists of thermoplastics waste in granulated form, mixed with water in the amount of 5% to 40% by weight, and with a frothing agent, advantageously aluminium dust, in the amount of 0.1% to 0.2% by weight, with the manufactured product - in form of a frothed substance - poured into a mould where the processing ends and cooling to the ambient temperature occurs.

6. The method according to Claim 1 **characterized by** the fact that the waste material consists of water emulsions of petroleum-derived waste.

7. The method according to Claim 1 **characterized by** the fact that the waste material consists of water emulsions of oily waste.

8. The method according to Claim 1 **characterized by** the fact that prior its mixing with the waste material, the reacting substance is earlier thoroughly mixed with porous mineral substances of high fluid-absorption capacity.

9. The method according to Claim 1 **characterized by** the fact that the temperature of the product transferred to curing chambers is higher by 1 to 40° C from the temperature specified by the requirements set out in the regulations concerning veterinary and microbiological safety.

10. The set-up for manufacturing products from waste material containing a reaction chamber with a mixer **characterized by** the fact that reaction chamber /1/ in the form of a drum has electric engine /2/ seated in its bottom, which via gear /3/ turns the drive shaft /4/ located along the symmetry axis of chamber /1/, with mixer /5/ equipped with stirrer arms /6/ mounted on drive shaft /4/, tilted scraper buckets /7/ located on the arm of mixer /5/, and cutting blades /8/ located underneath mixer /5/, additionally on the arm of mixer /5/ vertical slats /22/ are mounted, and in the upper part of the drive shaft, driver /9/ is mounted with mixing and pushing elements /10/ located underneath, in the sieve part of funnel /12/, whereas the upper part of reaction chamber /1/ contains at least one mixing pan /11/, made in form of a conical funnel and ending in its bottom part in sieve /12/, also in form of a truncated cone with longitudinal slits /13/, and in the walls of mixer pan /11/ the chutes feeding waste material /14/, reacting substance /15/, and corrective agent /16/ are mounted, while conical hood of fume-extracting system /18/ ending in chimney /19/ is situated above cover /17/ of mixing pan /11/, and ventilating slits /21/ are located between reactor wall /20/ and the rim of pan /11/, and the bottom of reaction chamber 1 is equipped with a system for product extraction /24/, with gate valve /25/ for product release located in the bottom of reaction chamber /1/, whereas reaction chamber /1/ with mixing pan /11/ and the ascending part of fume-extracting system /18/ are tucked in with heat-insulating lining /26/, covered with shield casing /27/, and sets of temperature sensors 23, 28 and 29 are located [both] in reaction chamber /1/ and in the fume extraction region.

11. The set-up according to Claim 10 **characterized by** the fact that slits /13/ are of the shape of an inverted trapezoid and widen to the outside.
